(19) Europäisches Patentamt
European Patent Office
Office européen des brevets

(11) **EP 2 110 798 A1**

(12) **EUROPÄISCHE PATENTANMELDUNG**

(43) Veröffentlichungstag:
**21.10.2009 Patentblatt 2009/43**

(51) Int Cl.:
*G08G 5/06* (2006.01)    *G01S 3/00* (2006.01)
*G01S 11/00* (2006.01)

(21) Anmeldenummer: **08015882.7**

(22) Anmeldetag: **09.09.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **16.04.2008 EP 08007465**

(71) Anmelder: **Siemens Aktiengesellschaft**
**80333 München (DE)**

(72) Erfinder:
• **Leutelt, Lutz, Dr.**
**81545 München (DE)**
• **Schnathmann, Detlef**
**91356 Kirchehrenbach (DE)**
• **Thiel, Hans Peter**
**91052 Erlangen (DE)**

(54) **Verfahren zur Überwachung eines Verkehrswegs für ein Verkehrsmittel einer vorbestimmten Art**

(57) Die Erfindung betrifft ein Verfahren zur Überwachung eines Verkehrswegs für ein Verkehrsmittel einer vorbestimmten Art, insbesondere für ein Flugzeug auf einer Fahrbahn eines Flughafens. Gemäß dem Verfahren wird in einem Abschnitt des Verkehrswegs (2) auftretende Geräuschsignale mit einem Schallaufnehmermittel (6, ..., 13) erfasst und derart ausgewertet, dass eine Lokalisationsinformation ermittelt wird, welche angibt, ob sich ein Verkehrsmittel (1) der vorbestimmten Art in dem Abschnitt des Verkehrswegs (2) befindet. Falls sich gemäß der Lokalisationsinformation ein Verkehrsmittel (1) der vorbestimmten Art in dem Abschnitt befindet, wird die Zulässigkeit des Aufenthalts des Verkehrsmittels (1) in dem Abschnitt in Abhängigkeit von einem oder mehreren vorgegebenen Kriterien überprüft, woraufhin ein entsprechendes Überprüfungsergebnis ausgegeben wird. Das erfindungsgemäße Verfahren zeichnet sich dadurch aus, dass über die Auswertung von Geräuschsignalen eine zuverlässige Lokalisation von Verkehrsmitteln unabhängig von Witterungsbedingungen erreicht werden kann. In bevorzugten Ausführungsformen kann die Lokalisationsinformation auch die räumliche Position des Verkehrsmittels enthalten und ferner können Bewegungs- und/oder Klassifizierungsinformationen durch die Auswertung der Geräuschsignale erhalten werden.

FIG 1

EP 2 110 798 A1

**Beschreibung**

Die Erfindung betrifft ein Verfahren zur Überwachung eines Verkehrswegs für ein Verkehrsmittel einer vorbestimmten Art, insbesondere für ein Flugzeug auf einer Fahrbahn eines Flughafens.

Auf Verkehrswegen tritt regelmäßig das Problem auf, dass sich Verkehrsmittel unautorisiert auf diesen Verkehrswegen befinden und sich dort fortbewegen. Dies kann zu schwerwiegenden Unfällen führen, da andere Verkehrsmittel nicht mit dem unautorisierten Verkehrsmittel auf dem Verkehrsweg rechnen. Insbesondere auf Flughäfen kommt es vor, dass sich Flugzeuge unautorisiert auf entsprechenden Bahnen, insbesondere auf der Start- bzw. Landebahn und auf Taxiwegen zur Zufahrt auf die Startbahn, befinden. Zur Regelung der Zufahrt auf die Startbahn sind an den Taxiwegen lediglich Anzeigeeinheiten in der Form von sog. Wigwags und sog. Stopbars vorgesehen. Bei diesen Stopbars handelt es sich um Unterflurfeuer auf dem Taxiweg, welche jedoch von Flugzeugen überfahren werden können. Wird ein Taxiweg oder gegebenenfalls auch eine andere Bahn auf dem Flughafen durch das Flugzeug aufgrund eines Fehlverhaltens des Piloten fälschlicherweise befahren, erfolgt für den Piloten keine Rückmeldung über sein Fehlverhalten. Das Fehlverhalten kann lediglich über die Besatzung des Flughafentowers festgestellt werden, was wiederum die Gefahr mit sich bringt, dass das Fehlverhalten durch das Towerpersonal zu spät gesehen oder übersehen wird. Demzufolge wird der Pilot zu spät oder überhaupt nicht über sein Fehlverhalten informiert und es können hierdurch Unfälle, insbesondere Kollisionen mit anderen Flugzeugen, unter Umständen nicht mehr verhindert werden.

Aufgabe der Erfindung ist es deshalb, ein Verfahren und eine Vorrichtung zur Überwachung eines Verkehrswegs für ein Verkehrsmittel einer vorbestimmten Art zu schaffen, welche eine zuverlässige und automatische Erkennung eines sich unzulässig auf dem Verkehrsweg befindlichen bzw. dort bewegenden Verkehrsmittels gewährleisten.

Diese Aufgabe wird durch das Verfahren gemäß Patentanspruch 1 oder die Vorrichtung gemäß Patentanspruch 22 gelöst. Weiterbildungen der Erfindung sind in den abhängigen Ansprüchen definiert.

In dem erfindungsgemäßen Verfahren werden die in einem Abschnitt des zu überwachenden Verkehrswegs auftretenden Geräuschsignale mit einem Schallaufnehmermittel erfasst. Diese Geräuschsignale werden dann derart ausgewertet, dass eine Lokalisationsinformation ermittelt wird, welche angibt, ob sich ein Verkehrsmittel der vorbestimmten Art in dem Abschnitt des Verkehrswegs befindet. Schließlich wird im Falle, dass sich gemäß der Lokalisationsinformation ein Verkehrsmittel der vorbestimmten Art in dem Abschnitt befindet, die Zulässigkeit des Aufenthalts des Verkehrsmittels in dem Abschnitt in Abhängigkeit von einem oder mehreren vorgegebenen Kriterien überprüft, woraufhin ein entsprechendes Überprüfungsergebnis ausgegeben wird.

Das erfindungsgemäße Verfahren wird besonders bevorzugt für die Überwachung von Verkehrswegen von Flugzeugen auf Fahrbahnen eines Flughafens eingesetzt. Insbesondere werden dabei die Taxiwege zu einer Start- und/oder Landebahn und/oder die Start- und/oder Landebahn selbst oder auch die Parkpositionen der Flugzeuge am Flughafen überwacht. Eine Parkposition stellt somit auch einen Verkehrsweg im Sinne der Erfindung dar. Bei der Erfassung von akustischen Geräuschen von Flugzeugen wird das Flugzeug insbesondere basierend auf den Flugzeugtriebwerk-Geräuschen und anderer flugzeugtypischer Schallabstrahlungen das Flugzeug lokalisiert. Gegebenfalls kann das erfindungsgemäße Verfahren auch für andere Verkehrsmittel, wie z.B. Kraftfahrzeuge auf Verkehrsstraßen oder Schienenfahrzeuge auf Schienenwegen, eingesetzt werden.

Das erfindungsgemäße Verfahren zeichnet sich dadurch aus, dass durch akustische Geräuscherkennung ein Verkehrsmittel vorbestimmter Art lokalisiert wird. Diese Art der Lokalisation hat den Vorteil, dass sie auch bei schlechten Witterungsverhältnissen zuverlässig funktioniert, was bei einer Lokalisation basierend auf anderen Techniken, wie z.B. Radar, nicht gegeben ist.

Zur Geräuscherkennung des Verkehrsmittels der vorbestimmten Art können hinlänglich aus dem Stand der Technik bekannte Geräuscherkennungsverfahren eingesetzt werden, welche mit entsprechenden Geräuschen der Verkehrsmittel der vorbestimmten Art vorab trainiert wurden. Insbesondere können statistische Klassifikationsverfahren zur Klassifikation der Geräuschsignale eingesetzt werden. Beispielsweise kann die in der deutschen Patentanmeldung DE 10 2007 044 407.0 beschriebene Sensoreinrichtung zum Erfassen und Auswerten der Geräuschsignale eingesetzt werden. Diese Sensoreinrichtung führt in einem ersten Betriebsmodus ein Geräuscherkennungsverfahren durch, wobei das Geräuscherkennungsverfahren in einem zweiten Betriebsmodus trainiert werden kann. Ebenso kann das Geräuscherkennungsverfahren gemäß der deutschen Patentanmeldung DE 10 2008 021 362.4 im erfindungsgemäßen Verfahren verwendet werden. Bei dieser Geräuscherkennung erfolgt basierend auf einem statistischen Grund-Klassifikationsmodell eine automatische Adaption des Modells an das akustische Umfeld. Der gesamte Offenbarungsgehalt der beiden genannten Patentanmeldungen wird durch Verweis zum Inhalt der vorliegenden Anmeldung gemacht.

In einer weiteren, besonders bevorzugten Ausführungsform berücksichtigen das oder die vorgegebenen Kriterien, von denen die Zulässigkeit des Aufenthalts des Verkehrsmittels der vorbestimmten Art abhängt, die aktuelle Verkehrssituation, insbesondere die Information über die aktuellen Start- und Landezeiten von Flugzeugen auf einem Flughafen. Hierdurch wird berücksichtigt, dass sich die Verkehrssituation, insbesondere auf Flughäfen, dynamisch verändert und somit auch die Zulässigkeitskriterien für den Aufenthalt eines Verkehrsmittels in bestimmten Bereichen dynamisch adaptiert werden müssen.

In einer weiteren Ausführungsform werden mit dem erfindungsgemäßen Verfahren Geräuschsignale in einem Frequenzbereich von im Wesentlichen 1 bis 4 kHz oder einen in diesem Frequenzbereich liegenden Teilband überwacht. Dieser Frequenzbereich umfasst im Wesentlichen die von einem Flugzeug erzeugten Geräusche, insbesondere auch die entsprechenden Turbinengeräusche der Flugzeuge.

Die Geräuschsignale werden in einer bevorzugten Ausführungsform der Erfindung mit einem Schallaufnehmermittel umfassend einen oder mehrere einzelne Schallaufnehmer, vorzugsweise in der Form von Mikrofonen, erfasst. Die Schallaufnehmer können dabei beliebig am oder im Verkehrsweg positioniert sein. Insbesondere können die Schallaufnehmer seitlich neben dem Verkehrsweg, beispielsweise seitlich neben einem Taxiweg, und/oder in dem Verkehrsweg, beispielsweise in einem oder mehreren Leuchtfeuern in einem Taxiweg, angeordnet sein.

In einer besonders bevorzugten Ausführungsform werden die Geräuschsignale mit einem oder mehreren Mikrofonarrays erfasst. Als Mikrofonarray kann beispielsweise ein lineares Mikrofonarray verwendet werden, in dem die Mikrofone entlang einer oder mehrerer gerader oder gegebenenfalls auch gekrümmter Linien angeordnet sind. Die Linien sind dabei insbesondere parallel zu der Richtung des Verkehrswegs, wodurch eine besonders effiziente Erfassung des Schalls gewährleistet ist. Gegebenenfalls können auch radiale Mikrofonarrays verwendet werden, in denen die Mikrofone im Wesentlichen kreisförmig angeordnet sind. Solche radialen Mikrofonarrays erlauben eine eindeutige Bestimmung der Richtung, aus der die Geräuschsignale empfangen werden. Als besonders geeignet haben sich für das erfindungsgemäße Verfahren Mikrofonarrays erwiesen, in denen der Abstand zu benachbarten Mikrofonen im Wesentlichen zwischen 3 und 4 cm liegt. Die Mikrofonarrays können eine beliebige Anzahl von Mikrofonen umfassen, vorzugsweise werden Arrays mit 4 bis 8 Mikrofonen verwendet. Anstatt bzw. zusätzlich zu den Mikrofonarrays können gegebenenfalls auch Richtmikrofone mit vorgegebener Richtcharakteristik eingesetzt werden.

Erfindungsgemäß können verschiedene Parameter der Geräuschsignale ausgewertet werden, um hierdurch das Verkehrsmittel vorbestimmter Art zu lokalisieren. Insbesondere können eine oder mehrere der folgenden Parameter der Geräuschsignale herangezogen werden:

- Laufzeitunterschiede und/oder Phasen der Geräuschsignale;
- die richtungsabhängige Dämpfung der Geräuschsignale;
- die entfernungsabhängige Dämpfung der Geräuschsignale;
- die entfernungsabhängige Klangcharakteristik der Geräuschsignale.

Die Klangcharakteristik wird dabei vorzugsweise mit entsprechenden Klassifikationsverfahren geeignet klassifiziert. Insbesondere werden hierzu hinlänglich aus dem Stand der Technik bekannte statistische Klassifikationsverfahren eingesetzt.

Basierend auf den oben genannten Parametern kann mit an sich bekannten Verfahren die Richtung bzw. die Entfernung des Verkehrsmittels zu einzelnen Schallaufnehmern und dadurch die exakte Position des Verkehrsmittels bestimmt werden.

In einer bevorzugten Variante wird bei der Auswertung der Geräuschsignale auch der Doppler-Effekt berücksichtigt, wodurch die Bewegungsrichtung eines Verkehrsmittels bestimmt werden kann. Ferner erfolgt die Auswertung der Geräuschsignale vorzugsweise derart, dass als Lokalisationsinformation auch die räumliche Position des Verkehrsmittels ermittelt wird und gegebenenfalls ausgegeben und weiterverarbeitet wird.

In einer weiteren Ausgestaltung des erfindungsgemäßen Verfahrens wird bei der Auswertung der Geräuschsignale neben der Lokalisationsinformation auch eine Bewegungsinformation ermittelt, welche die Geschwindigkeit und/oder die Richtung angibt, mit der bzw. in welche sich ein in dem Abschnitt des Verkehrswegs befindliches Verkehrsmittel bewegt, wobei diese Bewegungsinformation gegebenenfalls ausgegeben und/oder weiterverarbeitet wird.

In einer weiteren Ausführungsform des erfindungsgemäßen Verfahrens wird bei der Auswertung der Geräuschsignale ein Klassifikationsverfahren, insbesondere ein statistisches Klassifikationsverfahren, verwendet, welches die Geräuschsignale dahingehend klassifiziert, von welchem Typ von Verkehrsmitteln aus einer Menge von vorbestimmten Typen sie stammen, wodurch eine entsprechende Klassifikationsinformation ermittelt wird, welche gegebenenfalls ausgegeben und/oder weiterverarbeitet wird. Die Menge von vorbestimmten Typen umfasst in einer bevorzugten Variante ein oder mehrere Flugzeugtypen und/oder ein oder mehrere Zugmaschinen für Flugzeuge, denn der Aufenthalt eines Flugzeugs kann gegebenenfalls auch über die Geräuschsignale einer Zugmaschine ermittelt werden, welche das Flugzeug auf dem überwachten Verkehrsweg zieht.

Die oben beschriebenen Bewegungs- und/oder Klassifikationsinformationen können bei der Überprüfung der Zulässigkeit des Aufenthalts des Verkehrsmittels der vorbestimmten Art in dem Abschnitt des Verkehrswegs berücksichtigt werden. Beispielsweise kann das Befahren eines Verkehrswegs nur für einen vorbestimmten Typ von Verkehrsmittel erlaubt sein und für andere Typen unzulässig sein. Dementsprechend wird die Zulässigkeit des Aufenthalts des Verkehrsmittels auch unter Berücksichtigung des ermittelten Typs festgestellt. Ebenso können bestimmte Bewegungen des Verkehrsmittels, beispielsweise weg von einer Startbahn auf einem Taxiweg, unkritisch und somit zulässig sein, was ebenfalls bei der Überprüfung der Zulässigkeit berücksichtigt werden kann.

In einer weiteren Ausgestaltung des erfindungsgemäßen Verfahrens werden im Falle, dass gemäß dem Überprüfungsergebnis die Unzulässigkeit des Aufenthalts des Verkehrsmittels der vorbestimmten Art in dem Abschnitt des Verkehrswegs festgestellt wird, eine oder mehrere Maßnahmen zur Warnung von einer oder mehreren, das Verkehrsmittel steuernder Personen und/oder zum Eingriff in die Bewegung des Verkehrsmittels durchgeführt. Diese Maßnahmen können folgende Maßnahme umfassen:

- Ausgabe eines optischen und/oder akustischen Warnhinweises, insbesondere an einer Signalisierungseinheit am Verkehrsweg (z.B. an einem Wigwag oder einem Stopbar), und/oder an einer Signalisierungseinheit im Verkehrsmittel, wobei die Signalisierungsinformation beispielsweise drahtlos an das Verkehrsmittel übermittelt und auf der Signalisierungseinheit im Verkehrsmittel wiedergegeben werden kann.

In einer weiteren bevorzugten Ausführungsform der Erfindung werden bei der Auswertung der Geräuschsignale ferner über einen oder mehrere weitere Sensoren ermittelte Signale zur Lokalisation des Verkehrsmittels berücksichtigt, insbesondere über eine oder mehrere Videokameras und/oder über einen oder mehrere Radarsensoren und/oder über eine oder mehrere Lichtschranken ermittelte Signale. Auf diese Weise kann die Genauigkeit der Lokalisation erhöht werden.

Neben dem oben beschriebenen Verfahren umfasst die Erfindung ferner eine Vorrichtung zur Überwachung eines Verkehrswegs für ein Verkehrsmittel einer vorbestimmten Art, insbesondere für ein Flugzeug auf einer Fahrbahn eines Flughafens, umfassend:

- ein Schallaufnehmermittel zur Erfassung von in einem Abschnitt des Verkehrswegs auftretenden Geräuschsignalen;
- ein Auswertemittel, welches im Betrieb die erfassten Geräuschsignale derart auswertet, dass eine Lokalisationsinformation ermittelt wird, welche angibt, ob sich ein Verkehrsmittel der vorbestimmten Art in dem Abschnitt des Verkehrswegs befindet, wobei im Falle, dass sich gemäß der Lokalisationsinformation ein Verkehrsmittel der vorbestimmten Art in dem Abschnitt befindet, die Zulässigkeit des Aufenthalts des Verkehrsmittels in dem Abschnitt in Abhängigkeit von einem oder mehreren vorgegebenen Kriterien überprüft wird und ein entsprechendes Überprüfungsergebnis ausgegeben wird.

Die Vorrichtung ist dabei vorzugsweise derart ausgestaltet, dass jede Variante des oben beschriebenen erfindungsgemäßen Verfahrens mit der Vorrichtung durchführbar ist.

Ausführungsbeispiele der Erfindung werden nachfolgend anhand der beigefügten Figuren detailliert beschrieben.

Es zeigen:

Fig. 1    eine schematische Darstellung einer Ausführungsform einer erfindungsgemäßen Vorrichtung zur Überwachung eines Taxiwegs auf einem Flughafen;

Fig. 2    eine schematische Darstellung der räumlichen Beziehungen zwischen einem Mikrofonarray und einem Flugzeug auf einem Verkehrsweg zur Verdeutlichung der Positionsbestimmung des Flugzeugs gemäß einer Variante der Erfindung;

Fig. 3    eine schematische Darstellung, welche den Ablauf einer Ausführungsform des erfindungsgemäßen Verfahrens und der dabei verwendeten Komponenten wiedergibt.

Der bevorzugte Anwendungsfall des erfindungsgemäßen Verfahrens ist die Überwachung von Fahrbahnen auf Flughäfen, um sich auf falschen Bahnen bewegende bzw. dort befindliche Flugzeuge über die Erfassung von Geräuschsignalen zu orten. Bei der Detektion von unzulässig positionierten Flugzeugen werden in der hier beschriebenen Ausführungsform entsprechende Gegenmaßnahmen eingeleitet, insbesondere wird der Pilot geeignet gewarnt.

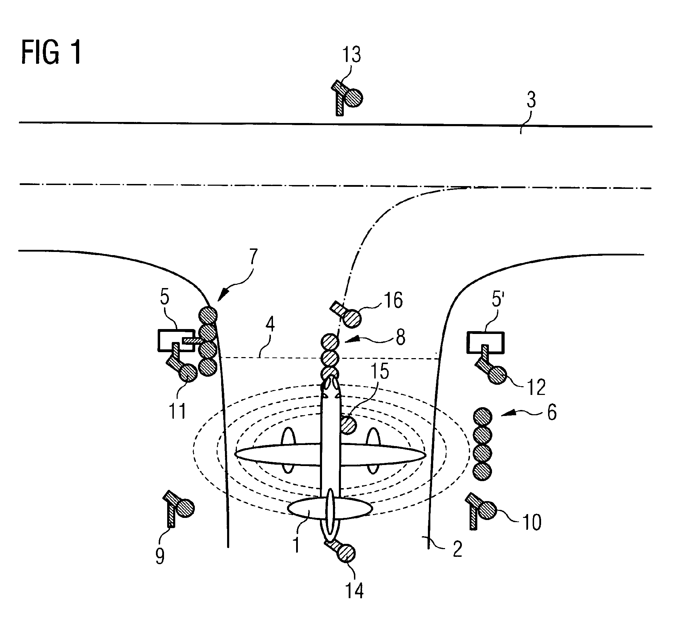

Fig. 1 zeigt in schematischer Darstellung in Draufsicht ein Szenario, bei dem sich ein Flugzeug 1 auf einem Taxiweg 2 befindet, der eine Zufahrt zu einer entsprechenden Startbahn 3 darstellt. Der sich ausbreitende Schall des Flugzeugs ist in Fig. 1 durch eine Mehrzahl von konzentrisch angeordneten Ellipsen im Bereich des Flugzeugs angedeutet. Am vorderen Ende des Taxiwegs ist eine Haltelinie als entsprechende Markierung 4 vorgesehen, an dem das Flugzeug wartet, bis es vom Tower des Flughafens die Starterlaubnis erhält. In Höhe der Haltelinie 4 sind seitlich links und rechts neben dem Taxiweg sog. Wigwags (Runway Guard Lights) 5 und 5' angeordnet, welche schematisch als Rechtecke angedeutet sind. Diese Wigwags stellen Signalisierungseinheiten für die Piloten im Flugzeug dar und geben über optische Leuchten verschiedene Hinweise, insbesondere wird auch angezeigt, ob die Startbahn durch das Flugzeug befahren werden kann.

Auf Flughäfen kommt es gelegentlich vor, dass ein Flugzeug den falschen Taxiweg als Zufahrt zur Startbahn verwendet oder ohne Autorisierung den Taxiweg zu früh verlässt, um die Startbahn zu befahren. Dies geschieht insbesondere bei schlechten Sichtverhältnissen aufgrund von Witterungseinflüssen, bei denen die Piloten beispielsweise entsprechende Stopbars übersehen. Es tritt somit ein sicherheitsrelevantes Problem auf, dass zu schwerwiegenden Unfällen führen kann. Derzeit erfolgt eine Überwachung eines falsch angefahrenen Taxiwegs bzw. einer Auffahrt auf die Startbahn ohne Autorisierung nur durch das Personal im Tower des Flughafens. Diese Überwachung birgt das Risiko, dass durch das Personal das Fehlverhalten des Piloten erst zu spät entdeckt wird und die Reaktionszeit zur Warnung des Piloten zu lange ist, um einen möglichen Unfall zu vermeiden. Im schlimmsten Fall kann es auch passieren, dass die Towerbesatzung das Fehlverhalten des Piloten gänzlich übersieht.

Um das oben dargelegte Sicherheitsproblem zu umgehen, wird gemäß der Ausführungsform der Fig. 1 vorgeschlagen, eine Mehrzahl von Schallaufnehmern in der Form von Mikrofonen an verschiedenen Positionen im Bereich des Taxiwegs anzuordnen. Über die Erfassung des Flugzeugschalls durch die Mikrofone und eine nachgeschaltete Auswertung kann dann ermittelt werden, ob sich ein Flugzeug auf dem Taxiweg befindet bzw. in welche Richtung und mit welcher Geschwindigkeit es sich auf diesem Taxiweg bewegt. Basierend auf einer derartigen Detektion kann dann beispielsweise ein gesonderter Warnhinweis mit Hilfe von speziellen Signallampen, insbesondere mit den eingangs erwähnten Stopbars, an den Flugzeugführer übermittelt werden, wenn die Zufahrt des Flugzeugs auf dem Taxiweg nicht zulässig ist. Vorzugsweise wird die Detektion eines Flugzeugs auf dem Taxiweg einer zentralen Recheneinheit gemeldet, welche auch auf Daten über den aktuellen Flugbetrieb und die Infrastruktur des Flughafens Zugriff hat. Mit Hilfe dieser Daten kann dann bestimmt werden, ob die Position des Flugzeugs auf dem Taxiweg zulässig ist. Das Verfahren kann auch auf andere Verkehrswege auf dem Flughafen angewendet werden, insbesondere auch auf eine Überwachung einer Start- bzw. Landebahn bzw. auf entsprechende Parkpositionen des Flugzeugs.

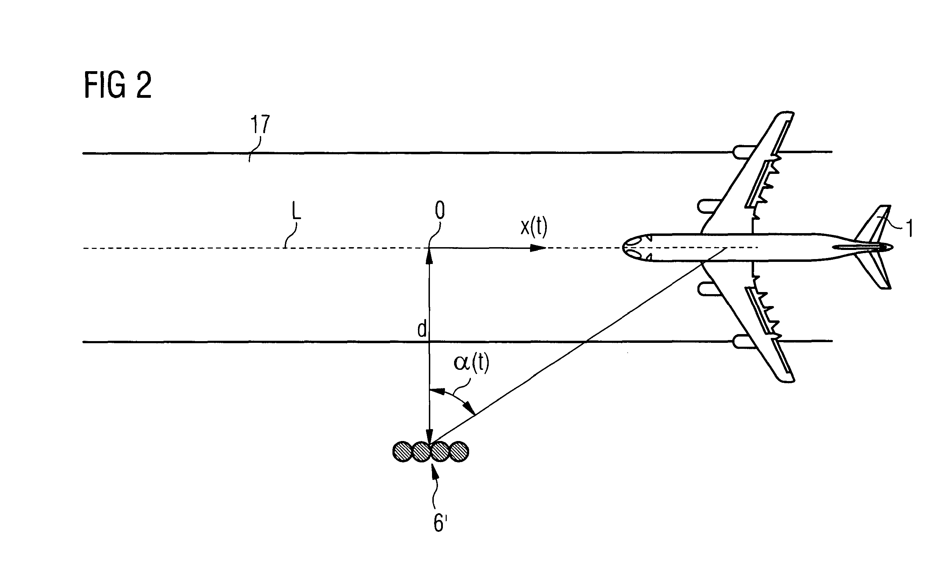

In der Ausführungsform der Fig. 1 sind verschiedene Anordnungen von Mikrofonen gezeigt. Zum einen ist rechts neben dem Taxiweg 2 in der Höhe der Flugzeugflügel des Flugzeugs 1 ein lineares Mikrofonarray 6 mit vier einzelnen Mikrofonen vorgesehen. Ein entsprechendes Mikrofonarray 7 ist ferner im Bereich der Haltelinie 4 auf der linken Seite des Taxiwegs angeordnet. Neben den seitlich montierten Mikrofonarrays ist ferner am Boden des Taxiwegs in der Höhe der Haltelinie 4 ein weiteres Mikrofonarray 8 angeordnet, welches ebenfalls ein lineares Array aus vier Mikrofonen ist. Das Mikrofonarray 8 ist in den Boden des Taxiwegs 2 eingelassen und behindert somit nicht die Bewegung des Flugzeugs. Gegebenenfalls können die auf dem Taxiweg üblicherweise vorhandenen Leuchtfeuer dazu verwendet werden, um in diese Leuchtfeuer die entsprechenden Mikrofonarrays zu integrieren. Über die Mikrofonarrays wird die Winkelposition einer Schallquelle, d.h. im Fall der Fig. 1 des Flugzeugs 1, ermittelt und hieraus mit Hilfe der Information über die Geometrie des Taxiwegs die räumliche Position des Flugzeugs bestimmt. Ferner kann auch die Geschwindigkeit des Flugzeugs ermittelt werden. Die Bestimmung der Position und Geschwindigkeit mit Hilfe eines entsprechenden Mikrofonarrays wird weiter unten in Bezug auf Fig. 2 erläutert.

Neben den Mikrofonarrays sind Richtmikrofone 9 bis 12 seitlich neben dem Taxiweg angeordnet. Die Mikrofone 9 und 10 sind dabei in einer Höhe am hinteren Ende des Flugzeugs positioniert, wohingegen die Mikrofone 11 und 12 an den Wigwags 5 bzw. 5' in der Höhe der Haltelinie angeordnet sind. Darüber hinaus ist zur frontalen Schallerfassung ein weiteres Richtmikrofon 13 seitlich an der Startbahn 3 in der Höhe des Taxiwegs angeordnet. Neben den seitlich angeordneten Mikrofonen 9 bis 13 sind darüber hinaus Richtmikrofone auf dem Taxiweg vorgesehen, welche mit den Bezugszeichen 14, 15 und 16 bezeichnet sind. Diese Richtmikrofone sind analog zu dem Mikrofonarray 8 in dem Boden des Taxiwegs eingelassen, wobei wiederum die Leuchtfeuer auf dem Taxiweg zur Integration der Mikrofone verwendet werden können. Die einzelnen Richtmikrofone weisen eine Richtcharakteristik mit einer entsprechenden Hauptkeule auf. Überschreitet das durch die Mikrofonarrays und Richtmikrofone jeweils detektierte Geräuschsignal einen vorbestimmten Schwellwert, kann hierdurch auf die Richtung geschlossen werden, aus der der Schall kommt, wodurch die Position des Flugzeugs bestimmt werden kann. Durch die Verwendung von mehreren Richtmikrofonen und Mikrofonarrays wird hierdurch eine genaue Positionsbestimmung durch Verrechnung und Fusion der Messdaten aller Mikrofone erreicht. Die über die Mikrofonarrays und Richtmikrofone erfassten Schallfrequenzen liegen in einem Frequenzbereich, in dem die üblichen Motorgeräusche von Flugzeugen liegen. Der Frequenzbereich kann dabei den von Menschen hörbaren Bereich und gegebenenfalls auch einen nichthörbaren Bereich (z.B. Ultraschall bzw. Infraschall) umfassen. Ebenso können Mikrofone auch durch Schallaufnehmer in der Form von Vibrationssensoren ersetzt werden.

Die Anordnung der einzelnen Mikrofone bzw. Mikrofonarrays gemäß Fig. 1 ist lediglich beispielhaft und es können auch andere Anordnungen zur Lokalisation des Flugzeugs über die Erfassung von Geräuschsignalen vorgesehen sein. Insbesondere können auch weitere Mikrofone bzw. Mikrofonarrays verwendet werden bzw. gegebenenfalls auch Teile der Mikrofone bzw. Mikrofonarrays weggelassen oder an anderen Positionen angeordnet werden. Mikrofonarrays bzw. Richtmikrofone können gegebenenfalls auch an entsprechenden Schildern am Taxiweg bzw. an eigens für die Mikrofone vorgesehenen Pfosten angeordnet werden. Werden die Mikrofonarrays bzw. Richtmikrofone im Boden integriert, sind entsprechende Maßnahmen vorzusehen, dass die Funktion der Mikrofone auch bei Schneefall nicht beeinträchtigt ist. Beispielsweise könnte eine entsprechende Heizung zum Schmelzen von Schnee im Bereich der Mikrofone vorgesehen sein.

Über die Richtcharakteristik, d.h. die richtungsabhängige Dämpfung, kann ein Flugzeug durch die Richtmikrofone lokalisiert werden. Eine entsprechende veränderbare Richtcharakteristik wird durch Phasenverschiebungen auch für die Mikrofonarrays erzeugt und zur Lokalisation genutzt, wie weiter unten noch beschrieben wird. Darüber hinaus können zur Lokalisation Laufzeitunterschiede des Flugzeugschalls bestimmt werden. Ebenso kann über die entfernungsabhängige Dämpfung des Flugzeugschalls der Abstand des Flugzeugs zu den einzelnen Mikrofonen und hierdurch ein Parameter für die Position des Flugzeugs bestimmt werden. Ferner können zur Lokalisation des Flugzeugs aus dem Stand der Technik bekannte Klassifikations- bzw. Bewertungsverfahren eingesetzt werden, welche über entfernungsabhängige Klangeigenschaften eines Flugzeugs dessen Position bestimmen. Mit einem geeignet trainierten statistischen Klassifikationsverfahren kann auch festgestellt werden, welcher Flugzeugtyp sich auf dem Taxiweg befindet. Diese Information kann gegebenenfalls auch weiterverarbeitet werden, da unter Umständen der Fall auftreten kann, dass ein Flugzeug, welches auf eine Startbahn auffahren will, aufgrund seines Typs nicht zum Starten auf dieser Bahn geeignet ist, da die Länge der Startbahn wegen der Größe des Flugzeugs nicht zum Abheben des Flugzeugs ausreicht. Die soeben beschriebenen möglichen Varianten zur Lokalisation eines Flugzeugs können zur Steigerung der Robustheit in geeigneter Weise miteinander kombiniert werden.

Fig. 2 zeigt beispielhaft, wie mit Hilfe eines Mikrofonarrays 6', welches die gleiche Bauform wie das Mikrofonarray 6 der Fig. 1 aufweist, ein Flugzeug 1 auf einem Verkehrsweg 17 lokalisiert werden kann. Im Betrieb wird durch das Mikrofonaray die zu dem Verkehrsweg hin gerichtete Umgebung in einem 180˚-Bereich gescannt, indem Phasensignale auf die einzelnen Mikrofone des Arrays addiert werden, wodurch die Richtcharakteristik des Arrays geändert wird. Das heißt, das Array verändert seine Richtung, in der es Schall "hören" kann. Schallgeräusche aus der Richtung, in der das Mikrofonarray gerade hört, werden gemäß den Phasenverschiebungen der Mikrofone konstruktiv addiert und es tritt ein entsprechendes Maximum auf. Zur effektiven Lokalisation von Schallmaxima für Flugzeugschall hat sich ein Mikrofonabstand von 3 bis 4 cm zwischen den Mikrofonen des Arrays 6' als praktikabel erwiesen.

Durch den oben dargelegten Scan des Mikrofonarrays kann somit der Winkel ermittelt werden, aus dem ein Schallmaximum empfangen wird. In Fig. 2 ist dies der Winkel $\alpha(t)$, der von der Zeit t abhängt, da sich in dem dargestellten Szenario das Flugzeug mit konstanter Geschwindigkeit v bewegt. Die tatsächliche Position des Flugzeugs x(t), welche ausgehend von dem Ursprung 0 nach rechts entlang der Mittellinie L der Fahrbahn 17 gemessen wird, ergibt sich mit Hilfe des Abstands d des Mikrofonarrays 6' von der Mittellinie L wie folgt:

$$\alpha(t) = \tan^{-1}(x(t)/d) = \tan^{-1}(v/d \cdot t)$$

Somit kann durch ein Mikrofonarray über die Bestimmung des Winkels $\alpha$, aus dem ein Schallmaximum empfangen wird, auch die Position des Flugzeugs lokalisiert werden. Darüber hinaus kann durch die zeitabhängige Veränderung des Winkels $\alpha(t)$, welche ebenfalls durch die Mikrofone erfasst werden kann, auch die Geschwindigkeit des Flugzeugs abgeschätzt werden. Die abgeschätzte Geschwindigkeit $\hat{v}$ ergibt sich dabei aus der zeitlichen Veränderung des Winkels und der aktuellen Winkelposition wie folgt:

$$\hat{v} = d \cdot \left[1 + [\tan(\alpha(t))]^2\right] \frac{d}{dt} \alpha(t)$$

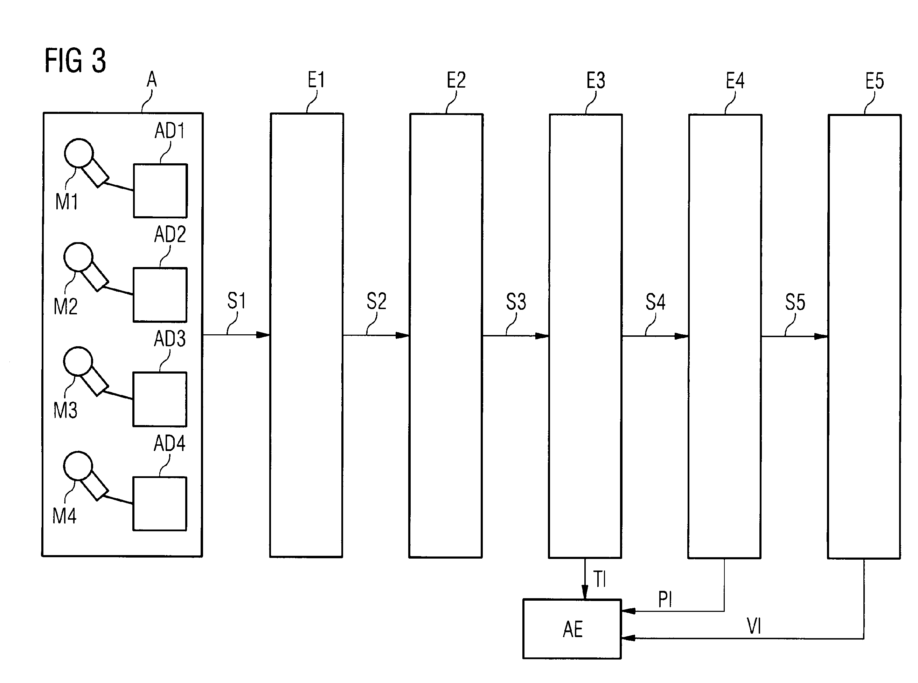

Durch die Verwendung von weiteren Mikrofonarrays bzw. Richtmikrofonen kann die Genauigkeit der Lokalisation weiter verbessert werden. Darüber hinaus besteht die Möglichkeit, den Schall näher zu klassifizieren, um zu ermitteln, von welchem Flugzeugtyp der Schall stammt. Eine entsprechende Ausführungsform, welche eine derartige Klassifikation des Schalls durchführt, wird nachfolgend anhand von Fig. 3 beschrieben.

Fig. 3 zeigt in schematischer Darstellung zunächst einen Schallwandler A in der Form eines Mikrofonarrays mit einzelnen Mikrofonen M1 bis M4. Der Schall, der durch die Mikrofone M1 bis M4 analog erfasst wurde, wird in dem Schallwandler A mit Hilfe einzelner Analog-Digital-Wandler AD1 bis AD4, welche jeweils einem der Mikrofone M1 bis M4 zugeordnet sind, digitalisiert. Im Folgenden werden die weiteren durchgeführten Schritte S1 bis S5 durch entsprechende Pfeile angedeutet. Wie durch den Schritt S1 angedeutet, wird das digitalisierte Geräuschsignal in einer Einheit E1 weiterverarbeitet, wobei in dieser Einheit abhängig vom Anwendungsfall eine entsprechende Gewichtung der Signale der Mikrofone erfolgt. Gegebenenfalls kann die Verarbeitung durch die Einheit E1 weggelassen werden. Das aufbereitete Signal wird in einem nächsten Schritt S2 einer Einheit E2 zugeführt, welche basierend auf den Signalen der Mikrofone ermittelt, ob überhaupt ein Geräuschsignal vorliegt, das einem Flugzeug entsprechen könnte. Dies geschieht beispielsweise durch einen Vergleich der Lautstärke der erfassten Geräuschsignale mit einem Schwellwert. Wird der Schwellwert überschritten, wird hieraus gefolgert, dass ein Flugzeug durch den Schallaufnehmer A erfasst wurde. Alternativ kann zusätzlich zum Schwellwert auch eine Klassifikation des Geräuschsignals durchgeführt werden, um sicherzustellen, dass auch tatsächlich ein Flugzeug für das über dem Schwellwert liegende Geräusch verantwortlich ist.

Anschließend wird in einem Schritt S3 in einem entsprechenden Klassifikationsmodul E3 ein Klassifikationsverfahren durchgeführt, um zu erkennen, von welchem Flugzeugtyp das Geräuschsignal stammt. Insbesondere wird dabei ein statistisches Klassifikationsverfahren eingesetzt. Solche Klassifikationsverfahren sind hinlänglich aus dem Stand der Technik bekannt und bestimmen im vorliegenden Anwendungsfall eine Klassenzugehörigkeit der erfassten Geräuschdaten anhand von Trainingsdaten, d.h. aus Merkmalsverteilungen von Geräuschsignalen, welche zuvor aufgenommen wurden und den Geräuschsignalen von bestimmten Flugzeugtypen entsprechen. Die Erfassung und Klassifikation der Geräuschsignale kann dabei beispielsweise basierend auf einer Sensoreinrichtung erfolgen, welche in der deutschen Patentanmeldung DE 10 2007 044 407.0 beschrieben ist. Der verwendete Klassifikator E3 wurde dabei mit Trainingsdaten gelernt, die aus entsprechenden Feldversuchen mit verschiedenen Flugzeugtypen stammen. Da sich die Geräuschsignale auf unterschiedlichen Flughäfen verschieden verhalten können, wird in einer bevorzugten Ausführungsform der Klassifikator nochmals in Betrieb auf dem vorgesehenen Flughafen an die Bedingungen dieses Flughafens adaptiert. Diese Adaption erfolgt insbesondere basierend auf dem Verfahren, welches in der deutschen Patentanmeldung DE 10 2008 021 362.4 beschrieben ist.

Nach Klassifikation des Flugzeugtyps erfolgt im Schritt S4 in einer weiteren Verarbeitungseinheit E4 die Positionsbestimmung des Flugzeugs, beispielsweise basierend auf dem anhand von Fig. 2 erläuterten Verfahren. Schließlich wird in einer weiteren Einheit E5 die Geschwindigkeit berechnet, wobei ebenfalls das anhand von Fig. 2 verwendete Verfahren eingesetzt werden kann. Die von den Einheiten ermittelten Daten werden einer gemeinsamen Auswerteeinheit AE zugeführt. Insbesondere wird die Information TI über den Flugzeugtyp, die Information PI über die Position des Flugzeugs sowie die Information VI über die Geschwindigkeit des Flugzeugs in der Auswerteeinheit AE ausgewertet. Die Auswerteeinheit kann dabei ein zentrales Flugmanagement darstellen, welches auf aktuelle Daten des Flugbetriebs und die Infrastruktur des Flughafens Zugriff hat. Es erfolgt schließlich ein Abgleich der Soll-Erwartung für die Position des entsprechenden Flugzeugtyps mit dem Istwert der tatsächlich bestimmten Position. Sollte der Istwert vom Sollwert abweichen, wird eine entsprechende Signalisierung durchgeführt, insbesondere wird der Pilot durch optische bzw. akustische Signale, beispielsweise durch eine entsprechende Signalisierung auf speziellen Signallampen eines Taxiwegs, gewarnt. Insbesondere können als Gegenmaßnahmen die oben beschriebenen Stopbars auf dem Taxiweg eingeschaltet werden.

Die anhand von Fig. 3 beschriebenen einzelnen Einheiten E1 bis E5 stellen funktionale Module dar, welche vorbestimmte Berechnungsschritte ausführen. Diese Module müssen nicht als getrennte Einheiten ausgestaltet sein, sondern können in einem Gesamtmodul integriert sein und werden insbesondere durch entsprechende Software realisiert.

In einer weiteren Ausgestaltung des erfindungsgemäßen Verfahrens können ferner weitere Positionsdaten von anderen Sensoren, wie z.B. Mikrowellensensoren, Kontaktschleifen und dergleichen, in der Auswerteeinheit AE mit den restlichen Daten fusioniert werden, um hierdurch die Genauigkeit der Lokalisation zu erhöhen.

Wie sich aus den vorangegangenen Ausführungen ergibt, kann mit der dargestellten Ausführungsform die Sicherheit auf Flughäfen erhöht werden, weil Piloten beim unerlaubten Fahren auf Taxiwegen, beim unerlaubten Verlassen von Taxiwegen bzw. beim unerlaubten Auffahren auf Taxiwegen gewarnt werden können. Dies geschieht mit Hilfe einer akustischen Geräuscherkennung der Flugzeuge, d.h. insbesondere der Turbinengeräusche der Flugzeuge. Gegebenenfalls kann die Geräuscherkennung auch derart ausgestaltet sein, dass neben bzw. anstatt von Flugzeugen Zugmaschinen erkannt werden, welche das Flugzeug auf dem Flughafengelände ziehen. Wird eine Zugmaschine lokalisiert, wird hieraus auf die Anwesenheit eines Flugzeugs geschlossen. Die erfindungsgemäße akustische Geräuscherkennung hat gegenüber anderen Sensoren den Vorteil, dass sie auch einen Betrieb bei schlechten Sichtverhältnissen ermöglicht, was beispielsweise bei Radarsensoren nicht gewährleistet ist.

**Patentansprüche**

1. Verfahren zur Überwachung eines Verkehrswegs (2) für ein Verkehrsmittel (1) einer vorbestimmten Art, insbesondere für ein Flugzeug auf einer Fahrbahn eines Flughafens, bei dem:

a) in einem Abschnitt des Verkehrswegs (2) auftretende Geräuschsignale mit einem Schallaufnehmermittel (6, ..., 16) erfasst werden;
b) die erfassten Geräuschsignale derart ausgewertet werden, dass eine Lokalisationsinformation ermittelt wird, welche angibt, ob sich ein Verkehrsmittel (1) der vorbestimmten Art in dem Abschnitt des Verkehrswegs (2) befindet;

c) falls sich gemäß der Lokalisationsinformation ein Verkehrsmittel (1) der vorbestimmten Art in dem Abschnitt befindet, die Zulässigkeit des Aufenthalts des Verkehrsmittels (1) in dem Abschnitt in Abhängigkeit von einem oder mehreren vorgegebenen Kriterien überprüft wird und ein entsprechendes Überprüfungsergebnis ausgegeben wird.

2. Verfahren nach Anspruch 1, bei dem mit dem Verfahren ein Taxiweg (2) auf einem Flughafen und/oder die Start- und/oder Landebahn (3) auf einem Flughafen und/oder eine Parkposition auf einem Flughafen überwacht werden.

3. Verfahren nach Anspruch 1 oder 2, bei dem das oder die vorgegebenen Kriterien die aktuelle Verkehrssituation, insbesondere die Information über die aktuellen Start- und Landezeiten von Flugzeugen (1) auf einem Flughafen, berücksichtigen.

4. Verfahren nach einem der vorhergehenden Ansprüche, bei dem mit dem Verfahren Geräuschsignale in einem Frequenzbereich von im Wesentlichen 1 bis 4 kHz oder einem in diesem Frequenzbereich liegenden Teilband überwacht werden.

5. Verfahren nach einem der vorhergehenden Ansprüche, bei dem die Geräuschsignale mit einem Schallaufnehmermittel umfassend einen oder mehrere einzelne Schallaufnehmer (6, ..., 16), insbesondere in der Form von Mikrofonen, erfasst werden.

6. Verfahren nach Anspruch 5, bei dem das oder die Schallaufnehmer (6, ..., 16) seitlich neben dem Verkehrsweg (2), insbesondere seitlich neben einem Taxiweg, und/oder in dem Verkehrsweg (2), insbesondere in einem oder mehreren Leuchtfeuern in einem Taxiweg, angeordnet sind.

7. Verfahren nach Anspruch 5 oder 6, bei dem die Geräuschsignale mit einem oder mehreren Mikrofonarrays (6, 7, 8) erfasst werden.

8. Verfahren nach Anspruch 7, bei dem zumindest ein Mikrofonarray ein lineares Mikrofonarray (6, 7, 8) ist, in dem die Mikrofone entlang einer oder mehrerer Linien angeordnet sind.

9. Verfahren nach Anspruch 7 oder 8, bei dem zumindest ein Mikrofonarray (6, 7, 8) ein radiales Mikrofonarray (6, 7, 8) ist, in dem die Mikrofone im Wesentlichen kreisförmig angeordnet sind.

10. Verfahren nach einem der Ansprüche 7 bis 9, bei dem der Abstand zu benachbarten Mikrofonen in dem Mikrofonarray im Wesentlichen zwischen 3 und 4 cm liegt.

11. Verfahren nach einem der Ansprüche 5 bis 10, bei dem die Geräuschsignale mit zumindest einem Richtmikrofon (9, ...,16) erfasst werden.

12. Verfahren nach einem der vorhergehenden Ansprüche, wobei bei der Auswertung in Schritt b) das Verkehrsmittel (1) der vorbestimmten Art in dem Abschnitt des Verkehrswegs (2) basierend auf einem oder mehreren der folgenden Parameter der Geräuschsignale lokalisiert wird:

- Laufzeitunterschiede und/oder Phasenunterschiede in den Geräuschsignalen;
- die richtungsabhängige Dämpfung der Geräuschsignale;
- die entfernungsabhängige Dämpfung der Geräuschsignale;
- die entfernungsabhängige Klangcharakteristik der Geräuschsignale.

13. Verfahren nach einem der vorhergehenden Ansprüche, wobei bei der Auswertung der Geräuschsignale in Schritt b) der Doppler-Effekt berücksichtigt wird.

14. Verfahren nach einem der vorhergehenden Ansprüche, wobei bei der Auswertung in Schritt b) als Lokalisationsinformation ferner die räumliche Position des Verkehrsmittels (1) ermittelt wird.

15. Verfahren nach einem der vorhergehenden Ansprüche, wobei bei der Auswertung in Schritt b) ferner eine Bewegungsinformation ermittelt wird, welche die Geschwindigkeit (v) und/oder die Richtung angibt, mit der bzw. in welche sich ein in dem Abschnitt des Verkehrswegs (2) befindliches Verkehrsmittel (1) bewegt.

16. Verfahren nach einem der vorhergehenden Ansprüche, wobei bei der Auswertung in Schritt b) eine Klassifikationsverfahren, insbesondere ein statistisches Klassifikationsverfahren, verwendet wird, welches die Geräuschsignale dahingehend klassifiziert, von welchem Typ von Verkehrsmittel (1) aus einer Menge von vorbestimmten Typen sie stammen, wodurch eine entsprechende Klassifikationsinformation ermittelt wird.

17. Verfahren nach Anspruch 16, bei dem die Menge von vorbestimmten Typen ein oder mehrere Flugzeugtypen und/ oder eine oder mehrere Zugmaschinen für Flugzeuge umfasst.

18. Verfahren nach einem der Ansprüche 15 bis 17, bei dem die Bewegungs- und/oder Klassifikationsinformationen bei der Überprüfung der Zulässigkeit des Aufenthalts des Verkehrsmittels (1) der vorbestimmten Art in dem Abschnitt des Verkehrswegs (2) in Schritt c) berücksichtigt werden.

19. Verfahren nach einem der vorhergehenden Ansprüche, bei dem im Falle, dass in Schritt c) gemäß dem Überprüfungsergebnis die Unzulässigkeit des Aufenthalts des Verkehrsmittels

    (1) der vorbestimmten Art in dem Abschnitt des Verkehrswegs
    (2) festgestellt wird, eine oder mehrere Maßnahmen zur Warnung von einer oder mehreren, das Verkehrsmittel
    (1) steuernder Personen und/oder zum Eingriff in die Bewegung des Verkehrsmittels (1) durchgeführt werden.

20. Verfahren nach Anspruch 19, bei dem die Maßnahmen folgende Maßnahme umfassen:

    - Ausgabe eines optischen und/oder akustischen Warnhinweises, insbesondere auf einer Signalisierungseinheit (5, 5') am Verkehrsweg (2) und/oder auf einer Signalisierungseinheit im Verkehrsmittel (1).

21. Verfahren nach einem der vorhergehenden Ansprüche, wobei bei der Auswertung in Schritt b) ferner über einen oder mehrere weitere Sensoren ermittelte Signale zur Lokalisation des Verkehrsmittels (1) berücksichtigt werden, insbesondere über eine oder mehrere Videokameras und/oder über einen oder mehrere Radarsensoren und/oder über eine oder mehrere Lichtschranken ermittelte Signale.

22. Vorrichtung zur Überwachung eines Verkehrswegs (2) für ein Verkehrsmittel (1) einer vorbestimmter Art, insbesondere für ein Flugzeug auf einer Fahrbahn eines Flughafens, umfassend:

    - ein Schallaufnehmermittel (6, ..., 16) zur Erfassung von in einem Abschnitt des Verkehrswegs (2) auftretenden Geräuschsignalen;
    - ein Auswertemittel, welches im Betrieb die erfassten Geräuschsignale derart auswertet, dass eine Lokalisationsinformation ermittelt wird, welche angibt, ob sich ein Verkehrsmittel (1) der vorbestimmten Art in dem Abschnitt des Verkehrswegs (2) befindet, wobei im Falle, dass sich gemäß der Lokalisationsinformation ein Verkehrsmittel (1) in dem Abschnitt befindet, die Zulässigkeit des Aufenthalts des Verkehrsmittels (1) der vorbestimmten Art in dem Abschnitt in Abhängigkeit von einem oder mehreren vorgegebenen Kriterien überprüft wird und ein entsprechendes Überprüfungsergebnis ausgegeben wird.

23. Vorrichtung nach Anspruch 22, wobei die Vorrichtung derart ausgestaltet ist, dass ein Verfahren nach einem der Ansprüche 2 bis 21 mit der Vorrichtung durchführbar ist.

# FIG 1

FIG 2

EP 2 110 798 A1

FIG 3

EP 2 110 798 A1

Europäisches
Patentamt

European
Patent Office

Office européen
des brevets

# EUROPÄISCHER RECHERCHENBERICHT

Nummer der Anmeldung

EP 08 01 5882

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2008/035981 A (UNIFIED MESSAGING SYSTEMS AS [NO]; HEEN KJELL [NO]; HELVIG MORTEN H [N) 27. März 2008 (2008-03-27) | 1-8, 14-20, 22,23 | INV. G08G5/06 G01S3/00 G01S11/00 |
| Y | * Seite 4, Zeile 23 - Seite 7, Zeile 17 *<br><br>* Seite 9, Zeile 23 - Zeile 37 *<br>* Abbildungen 1,10 *<br>----- | 9,11,12, 21 | |
| X | US 6 253 064 B1 (MONROE DAVID A [US]) 26. Juni 2001 (2001-06-26)<br><br>* Spalte 3, Zeile 48 - Zeile 59 *<br>* Spalte 14, Zeile 35 - Zeile 50 *<br>* Spalte 16, Zeile 21 - Zeile 29 *<br>* Spalte 20, Zeile 56 - Spalte 21, Zeile 10 *<br>* Spalte 23, Zeile 62 - Spalte 24, Zeile 12 *<br>* Abbildung 15 *<br>----- | 1-6,14, 15,17, 21-23 | |
| Y | US 5 189 425 A (DABBS JOHN W T) 23. Februar 1993 (1993-02-23)<br>* Spalte 2, Zeile 28 - Spalte 5, Zeile 6 *<br>* Spalte 10, Zeile 38 - Zeile 44 *<br>* Abbildung 8 *<br>----- | 9,12,21 | RECHERCHIERTE SACHGEBIETE (IPC)<br><br>G08G<br>G01S |
| Y | US 3 844 175 A (HIXSON E) 29. Oktober 1974 (1974-10-29)<br>* Spalte 3, Zeile 18 - Zeile 29 *<br>* Spalte 4, Zeile 66 - Spalte 5, Zeile 12 *<br>* Spalte 5, Zeile 67 - Spalte 6, Zeile 4 *<br>----- | 11 | |
| A | GB 2 288 462 A (CIRRUS RESEARCH PLC [GB]) 18. Oktober 1995 (1995-10-18)<br>* das ganze Dokument *<br>----- | 1-23 | |

Der vorliegende Recherchenbericht wurde für alle Patentansprüche erstellt

| Recherchenort | Abschlußdatum der Recherche | Prüfer |
|---|---|---|
| München | 22. Juli 2009 | Seisdedos, Marta |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 01 5882

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-07-2009

| Im Recherchenbericht angeführtes Patentdokument | Datum der Veröffentlichung | Mitglied(er) der Patentfamilie | Datum der Veröffentlichung |
|---|---|---|---|
| WO 2008035981 A | 27-03-2008 | AU 2007297938 A1<br>CA 2663464 A1<br>US 2009009357 A1 | 27-03-2008<br>27-03-2008<br>08-01-2009 |
| US 6253064 B1 | 26-06-2001 | KEINE | |
| US 5189425 A | 23-02-1993 | KEINE | |
| US 3844175 A | 29-10-1974 | KEINE | |
| GB 2288462 A | 18-10-1995 | AU 2145595 A<br>WO 9527910 A1 | 30-10-1995<br>19-10-1995 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102007044407
- DE 102008021362